# EUROPEAN PATENT SPECIFICATION

(11) **EP 4 147 952 B1**
(45) Date of publication and mention of the grant of the patent: **10.09.2025**
(21) Application number: 21382828.8
(22) Date of filing: 14.09.2021
(51) Int. Cl.: B62H 3/04, B62H 3/12

(54) **WHEEL HOLDER FOR A BICYCLE HANDLING SYSTEM AND CORRESPONDING HANDLING SYSTEM**
RADHALTER FÜR EIN FAHRRADHANDHABUNGSSYSTEM UND ENTSPRECHENDES HANDHABUNGSSYSTEM
SUPPORT DE ROUE POUR UN SYSTÈME DE MANIPULATION DE BICYCLETTE ET SYSTÈME DE MANIPULATION CORRESPONDANT

(43) Date of publication of application: 15.03.2023
(73) Proprietor: Ignasi Clotet, S.L.U., 25230 Mollerusa (ES)
(72) Inventor: Caba Muntada, Joan, 25230 Mollerussa (ES); Sala Lanau, Ferran, 25230 Mollerussa (ES)
(74) Representative: Curell Suñol S.L.P.

(56) References cited:
- CN-U- 208 731 114
- CN-U- 209 413 375
- JP-U- S5 864 587

## Description

### Field of the invention

The invention relates to a wheel holder for holding a first wheel of a bicycle in a bicycle handling system according to the preamble of claim 1.

The invention further relates to an elevated bicycle handling system comprising a lifting rail extending longitudinally between a delivery level and a storage level, elevated relative to said delivery level, said lifting rail defining a lifting direction bicycle handling system including a wheel holder according to the invention.

### State of the art

In the recent years due to environmental reasons and for sake of sustainability two wheeled transport such as with bicycles has become more and more popular in the world and has experienced an exponential growth. Both conventional bicycles as well as scooters, but also their electrified versions are more and more used in the cities as an alternative to private cars or public transport.

To cover these needs many cities have invested in public collective bicycle or scooter sharing services, allowing users to use a public bicycle against a monthly fee. This provides for users not having to own a bicycle which is an important advantage. However, these systems are not always reliable in terms of availability of bicycles. Therefore, although these collective services have been a relevant great success, many riders of middle to large size cities opt for owing and riding their own bicycle or scooter. This is an advantage in terms of flexibility for the rider. Furthermore, owning an own vehicle has the advantage the user does not have to ride a vehicle which often is not in perfect mechanical conditions.

Furthermore, this social change for sustainability has even been accelerated and increased during this year 2020 due to the Covid pandemic. In middle to large size cities many people want to avoid public transportation to not to be obliged to travel in closed spaces with a relevant amount of people.

In any case, middle and large size cities were not ready for this great increase of private two wheeled transportation and thus there is a need for two wheeled vehicle storage capacity. Furthermore, most of the cities have space problems in the city centre, i.e., there is not much construction space for creating new storing facilities.

Therefore, there is a need bicycle storing systems that have the less impact possible in terms of street space occupied. This has led to elevated bicycle storing systems to be more and more popular, since they do not significantly occupy street space.

These elevated bicycle storing systems use different holding strategies to hold the bicycle of move it to the storing area. Some solutions hold the handlebar of the bicycle, while other hold one of the wheels.

CN109367657 discloses a bicycle holder comprising an upper hook for holding the bicycle from an upper frame. The hook holds the bicycle by the inner diameter of the rim. This wheel holder can easily scratch the rim. Apart from damaging the aesthetic appearance, this can lead to premature wear of the brake pads.

EP3551525 discloses a bicycle holder having two side arms. When the upper parts of side arms of the wheel holder are actuated, they move towards each other and stand parallel to the plane of the wheel. Rubber pads located in the upper part of the side arms press the front wheel against both sides at the spokes of the wheel rim and thus fix it. Again, this holding system can easily damage the spokes of the wheel, either causing them to brake of deforming the spokes. Spoke deformation can easily lead to wheel rim deformation.

CN209413375U discloses a modular vertical bicycle parking device according to the preamble of claim 1.

On the other hand, it must be pointed out that these problems do not simply arise in bicycle storage systems. Also bicycle production lines require often holding the bicycles hanging by the wheel from a guiding rail. Depending on the holding way, the wheel may be damaged and thus harm its commercial value.

### Summary of the invention

It is an object of the invention to propose a wheel holder for a bicycle handling system which can receive any size of wheel diameter and that provides a good holding performance without damaging the wheel. This purpose is achieved by wheel holder of the type indicated at the beginning, characterized by the characterizing portion of claim 1.

In the context of the invention, a handling system can be among others, a production line, a storing system, or parking place for bicycles.

The expression receiving the wheel in centered manner in the tread section here indicates that once the wheel is received in the tread supporting section and the wheel adopts a wheel resting position in case the wheel is forced to slightly move forwards or backwards, it returns to the center of the tread supporting section on its own to the resting position. Therefore, to withdraw the wheel from the tread supporting section, the wheel must overcome the limits of the tread supporting section.

Thanks to the self-centering device, no matter what size of the wheel is to be held, the first wheel is always positioned in the correct position in the longitudinal direction of the wheel. Furthermore, when the first and second arms of the clamp are in closed position, the wheel is centered relative to the wheel central plane, as well as in the longitudinal direction. Furthermore, when the first wheel is held between the self-centering device for receiving said first wheel in said wheel holder in a centered manner and the first and second arms, this causes an alignment between the center of the wheel hub and the point of the tread on which the first wheel would contact the ground during normal use. This alignment is common to any wheel size. In other words, the wheel holder of the invention provides a universal holding system for all wheel sizes.

The elastic load exerted by the elastic member causes the clamp to be always in closed position at rest. Therefore, to move the clamp into the open position, the first and second arms must be distanced from one another overcoming the force exerted by the elastic member. The closed position at rest provides for the wheel to be always firmly held no matter how. This type of wheel holder is very convenient for handling the bicycle in bicycle handling systems in which the bicycle must be moved from one location to the other duly held by the wheel holder and more particularly if the bicycle must be elevated holding the first wheel. The bicycle can be held hanging vertically without risk for the bike to fall, thus improving the handling security. The elastic member can be, among others, a metal spring of any shape, a gas spring, a rubber spring, or the like.

Finally, since the first and second arms are conceived to clamp the side walls of the tyre, the wheel rim is better protected. In other words, the invention clearly differs from the prior art holders in that the main clamped element is the tyre. However, it cannot be discarded that sometimes the first wheel is held by the rim, e.g., when the tyre is flat or when the tyre is as wide as the rim. However, this is a situation which occurs quite infrequently. In any case, should this happen, in the closed position, the clamp would move further until the first and second arms compress the wheel rim. In this case, although the tyre is flat or the tyre is very narrow, the bicycle is still hold firmly in the wheel holder, and the spikes are not manipulated, thus overcoming the disadvantages and risks described for the wheel holders of the art.

Further as it is apparent, in the invention both the first and second arms can move from the open to the closed position. However, it can also happen that one of the arms is static, i.e. it does not move, while the other arm moves from the open to the closed position and back, approaching the other static arm.

Also preferably, to receive the first wheel in a more convenient way said opening is oriented upwards to facilitate the insertion of the first wheel.

Preferably, said clamp further comprising an actuator drivable to exert a force against said force of said elastic member. Said actuator is preferably a pneumatic or electric actuator.

The invention further includes several preferred features that are object of the dependent claims and the utility of which will be highlighted hereinafter in the detailed description of an embodiment of the invention.

In a preferred embodiment said first and second arms comprise a first section, arranged to the side of said tread supporting section, in which said first and second arms mutually converge towards each other as they distance from said tread supporting section and a second section, arranged opposite to said first section, in which said first and second arms mutually diverge from each other as they distance from said tread supporting section. This geometry facilitates the insertion of the first wheel and improves the holding of the tyre.

Preferably said first section is inclined relative to said longitudinal symmetry plane at an angle comprised between 4 and 10°.

Preferably said first and/or said second arms are slidably mounted by means of a longitudinal guide.

Also, to improve the holding security of the wheel holder said first and second arms comprise a covering layer arranged at least on the surface of said first and second arms facing said central symmetry plane, said covering layer being made of a rubber elastic material. Examples of rubber elastic material are, among others, natural or synthetic rubber. For example, an environmentally friendly solution consists of attaching old, recycled tyres to the inner surface of the first and second arms. Alternatively, the covering layer can be a cap completely covering the first and second arms.

Preferably said first and second arms are made of spring steel.

In another embodiment maximizing the holding surface, the surface of said first and second arms facing said central symmetry plane is planar. This leads to a planar contact of the arms on the tyre, increasing the holding surface, but also reducing an excess of pressure on the tyre.

Further to facilitate the handling of the clamp, for example, in systems where the bicycle must be transferred from the wheel holder to another moving clamp of a carroussel, said clamp comprises a second pair of first and second arms, said first and second pairs of first and second arms being arranged distanced to each other, symmetrically to a transversal central symmetry plane perpendicular to said longitudinal central symmetry plane. The separation between the two pairs of first and second arms provides for space for a second clamp to be inserted therebetween to hold the wheel.

In another embodiment, seeking to improve the self-centering of the first wheel said first and second pairs of first and second arms are functionally associated to each other such that said first pair and said second pair move between said closed and said open position in a synchronised manner. This also increases the clamping speed and the holding precision.

Optionally, to obtain an easy centering of the first wheel relative to the wheel holder said self-centering device comprises two centering wheels having a decreasing diameter towards said central symmetry plane, said centering wheels being distanced from one another relative to said transversal central symmetry plane P2 such that in use, the first wheel is self-centered relative to transversal central symmetry plane.

Especially preferably said two centering wheels are identical and symmetrically arranged relative to said transversal central symmetry plane, to simplify the design of the wheel holder. It is also preferable that the centering wheels are configured as idler wheels, freely rotatable about their own axis.

To simplify the manufacture, said two wheels are made from a first and a second frustoconical wheels facing each other by the smaller diameter thereof. However, said first and second wheels can have the shape of any revolution frustum, if the generating curve of the frustum converges from the outer diameter to the inner diameter.

Preferably, said centering wheels are made as a single part, and even more preferably said self-centering wheels are hourglass shaped, that is their outer diameter constantly decreases towards the central plane of the wheel.

The invention refers further to an elevated bicycle handling system. An elevated handling system can be among others, a production line, a storing system or parking place for bicycles. The system comprises a wheel holder according to the invention said wheel holder being movably mounted on said lifting rail along said lifting direction between said delivery level and said storage level said wheel holder is further rotatably mounted relative to said lifting rail about a rotation axis perpendicular to said lifting direction, between a delivery position in which said opening of said wheel holder is facing upwards at said delivery level for receiving said first wheel, and a lifting position in which said opening of said wheel holder is facing downwards at said storage level, and the movement of said wheel holder along said lifting direction and the rotation of said wheel holder are functionally associated to one another to cause the rotation of said wheel holder between said delivery and lifting positions during the movement of said wheel holder between said delivery and storage levels.

This bicycle handling system provides for flexibility regarding the size of bicycles to store since the device is not wheel-size dependent. In other words, both adult bicycles, with different wheel sizes, as well as children's bicycles can be stored without trouble. When storing the bicycle, the wheel is inserted in the wheel holder, such that the area of the first wheel contacting the floor lies on the wheel holder, and the wheel holder is located under the first wheel, that is the wheel is placed on the wheel holder no matter which diameter it has.

Then when wheel holder starts moving from the delivery level to the storage level, the wheel holder during the movement is led to rotate from the delivery position towards the storing position. Thanks to this, when the bicycle reaches the storage level, it is held hanging vertically from the wheel holder. By doing this the centre of the wheel holder is aligned with the rotation axis of the first wheel and the centre of mass of the bicycle, independently of the wheel size.

On the other hand, it must be pointed out that in the invention the expression *lifting device* is used for sake of simplicity. However, the lifting device works both for lifting the bicycle from the delivery level to the storage level of the bicycle handling system, but also for lowering or descending the bicycle from the storage level to the delivery level.

It must also be pointed out, that preferably the first wheel is the front wheel, because it is more practical to deliver and withdraw the bicycle from the lifting device. However, this is not essential for the invention.

To provide a simpler a faster storage or handling and reduce the place required, said lifting rail is straight and is arranged in upright position.

Preferably to facilitate the wheel holder to hold the first wheel in said delivery position, said opening of said clamp is facing vertically upwards, while in said lifting position said opening of said clamp is facing vertically downwards.

In another preferred embodiment said lifting rail and said wheel holder comprise a first rotation device and a second rotation device, said first rotation device being located close to delivery level and remote to said storage level, and said second rotation device being located close to said storage level and remote to said delivery level, such that when said wheel holder is moved between said delivery level and said storage level, said first rotation device causes a first rotation of said wheel holder relative to said lifting rail between said delivery position and an intermediate position and said second rotation device causes a second rotation of said wheel holder relative to said lifting rail between said intermediate position and said lifting position.

In further embodiment, in order to reduce the number of motors required to drive the lifting device, said first and second rotation devices comprise a rotation cam and a rotation lever, said rotation cam and said rotation lever being functionally associated to said lifting rail and said wheel holder to cause said first and said second rotation of said wheel holder relative to said lifting rail during the movement of said wheel holder between said delivery level and said storage level. These rotation devices avoid the need of a motor dedicated to the rotation of the wheel holder in a synchronized manner with the movement of the wheel holder along the longitudinal direction of the lifting rail.

In another embodiment seeking to avoid that the bicycle swings during its displacement along the lifting rail, the storing system comprises a first guiding rail arranged facing said wheel holder such that in use, said first guiding rail receives and guides the second wheel opposite to the first wheel held by said wheel holder during the movement of said bicycle along said lifting rail. As already explained, once the bicycle is hanging it tends to align itself along the vertical line passing through the centre of the first wheel and the centre of mass of the bicycle. By providing this first guiding rail the bicycle has a supporting surface for the second wheel avoiding undesired back and forth swinging around the first wheel rotation axis or side movements when the first wheel is the front wheel of the bicycle.

In a preferred embodiment seeking to avoid that bicycles having mudguard, the rear mudguard contacts the ground during the lifting of the bicycle, said first guiding rail comprises an upper main section and a lower tilting end section, said tilting end section being tiltable about a tilting axis, relative to said main section between an aligned position in which said tilting end section is aligned with said main section of said first guiding rail and an angled position in which said tilting end section is angled relative to said main section of said first guiding rail towards said wheel holder, said tilting end section being functionally associated with said wheel holder to go from the aligned position to the angled position once said wheel holder moving towards said storage level overcomes said tilting axis.

In another embodiment said main section of said first guiding rail is parallel to said lifting rail.

In another embodiment seeking to help the user to correctly place the bicycle in the wheel holder, the lifting device further comprises a second guiding rail for receiving at least said first wheel, said second guiding rail having a first and a second ends, and said second guiding rail being aligned with said wheel holder and having said second end arranged adjacent to said wheel holder for guiding the first wheel into said wheel holder.

further comprises a second guiding rail for receiving at least said first wheel, said second guiding rail comprising a first end being aligned with said wheel holder and ending in said wheel holder for guiding the first wheel into said wheel holder.

Also, to reduce the installation work of the lifting device and making the placement of the bicycle more intuitive said second guiding rail is inclined upwards towards the wheel holder.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figures 1A to 1F show detailed views a first embodiment of the wheel holder of the invention with a first wheel held in the wheel holder.
Figures 2A and 2B show detailed views of a second embodiment of the wheel holder of the invention.
Figure 3 is a schematical view of the elevated handling system including the wheel holder of the invention.

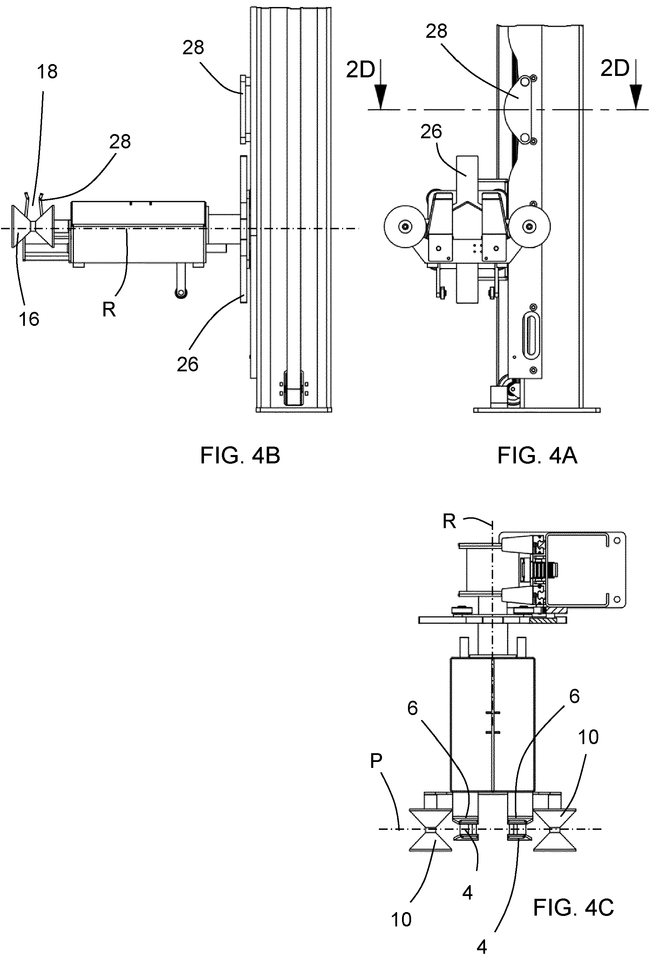

Figures 4A to 4C show the wheel holder of Figures 3A to 3D with a guiding rail.
Figure 5 is a perspective view of the wheel holder of the invention mounted in a elevated bicycle storing system of the invention.
Figure 6 shows the wheel holder of the invention and the guiding rail of Figure 5.
Figures 7A to 7I show front views of the lifting device according to the invention during the storage process of a bicycle, while Figure 7J shows a side view thereof.
Figures 8A to 8C show three different rotation positions of the wheel holder relative to the lifting rail of the bicycle handling system according to the invention during the storage of a bicycle.
Figure 9 shows a schematic section view of a first embodiment of the elastic member of the wheel holder of the invention.
Figure 10 shows a schematic section view of a second embodiment of the elastic member of the wheel holder of the invention.

### Detailed description of embodiments of the invention

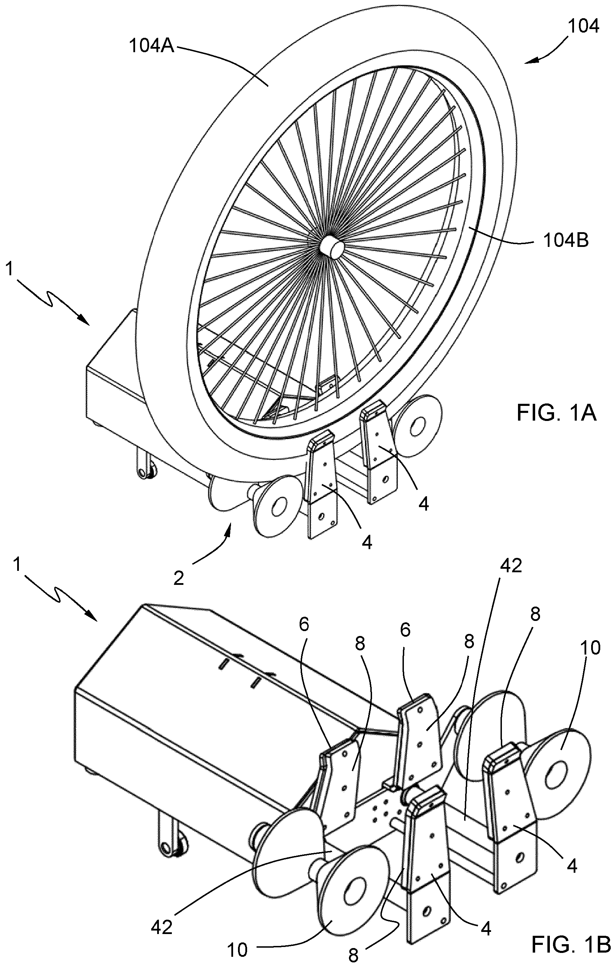

Figures 1A to 1F show a first embodiment of the wheel holder 1 of the invention.

The wheel holder 1 is applied for holding a first wheel 104 of a bicycle 102 in a bicycle handling system 100, the first wheel 104 comprising a tyre 104A and a wheel rim 104B. Although the wheel holder 1 of the invention is especially appropriated for elevated bicycle handling systems, it is not exclusively conceived for this purpose.

The wheel holder 1 comprises as main parts, a clamp and a tread supporting section.

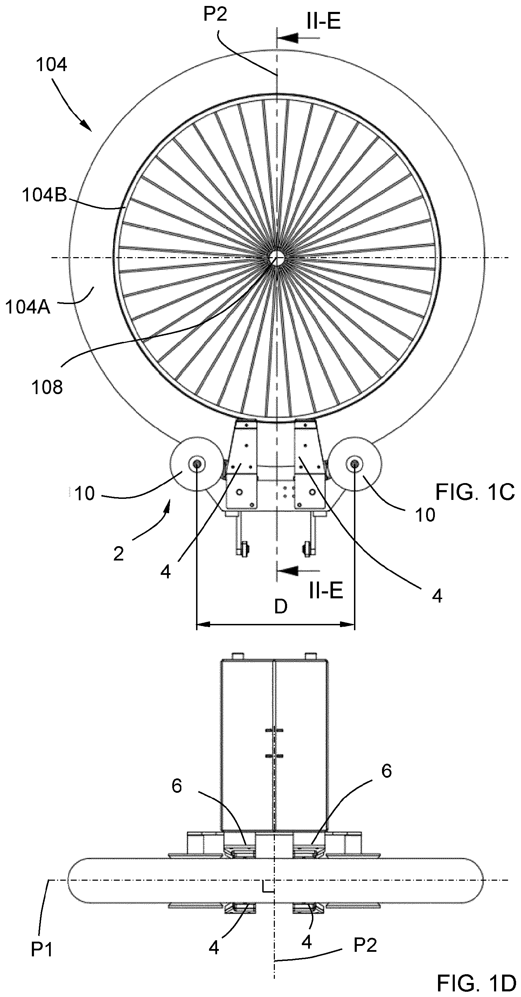

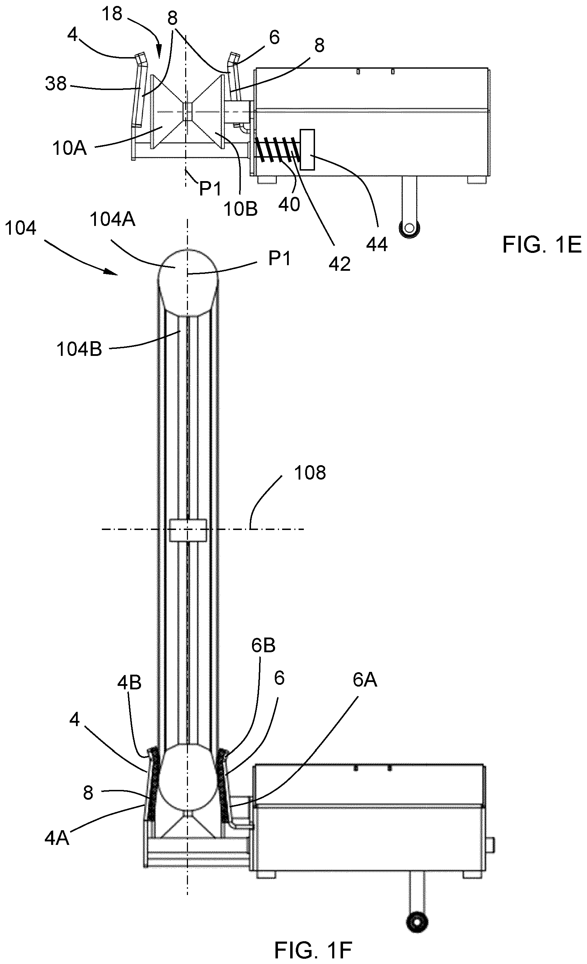

The tread supporting section comprises a self-centering device 2 for receiving the first wheel 104 in the wheel holder 1 in a centered manner. As it will be described below it is preferable that the first wheel 104 is the front wheel of the bicycle. As it is apparent from Figures 1E or 1F, in this embodiment, the self-centering device 2 comprises two centering wheels 10 having a decreasing diameter towards the central symmetry plane P1. The centering wheels 10 being distanced a distance D from one another relative to a transversal central symmetry plane P2. Figure 1C shows how in use, the first wheel 104 is self-centered relative to transversal central symmetry plane P2, since the axis of rotation 108 of the first wheel 104, lies exactly on the transversal symmetry plane P2 of the wheel holder 1.

In this case, the two centering wheels 10 are identical and symmetrically arranged relative to said transversal central symmetry plane P2. In this case (see Figure 1E), each of these two centering wheels 10 is made from a first and a second frustoconical wheels 10A, 10B facing each other by the smaller diameter thereof.

Further, the clamp of the wheel holder 1 comprises, first and a second arms 4, 6. More particularly, in this case, a pair of first and second arms 4, 6 are provided in the clamp. Figures 1E and 1F, show how this pair of first and second arms 4, 6 protrude relative to the tread supporting section. Furthermore, each second arm 6 is arranged facing its corresponding first arm 4, symmetrically to a longitudinal central symmetry plane P1, as shown in Figure 1E. The corresponding first and second arms 4, 6 define an opening 18 for receiving the first wheel 104 of the bicycle 102 lengthwise, that is, that the first wheel central plane 110, perpendicular to the wheel rotation axis 108 is coplanar with the longitudinal central symmetry plane P1. Furthermore, figures 1C and 1D show that the pair of first and second arms 4, 6 are arranged distanced to each other, symmetrically to a transversal central symmetry plane P2. This transversal central symmetry plane P2 is perpendicular to the longitudinal central symmetry plane P1, as it is apparent from Figure 1D.

The clamp further comprises an elastic member 40 shown in Figure 1E schematically, for illustrative purposes only.

Then, the first and second arms 4, 6 are movable relative to each other between an open and a closed position.

In the open position, shown in this Figure 1E, the pair of first and second arms 4, 6 are distanced from each other for allowing the insertion or extraction of the first wheel 104 between said first and second arms 4, 6.

On the other hand, in the closed position, which is shown in Figure 1F the pair of first and second arms 4, 6 are close to each other for holding the side walls of said tyre 104A inserted between the first and second arms 4, 6.

The said elastic member 40 is functionally associated with said first and second arms 4, 6 thanks to a stopper 44 provided at the end of the guide 42 slidingly movable between said open and said closed position, to exert a force causing said first and second arms 4, 6 to adopt at rest, the closed position of Figure 1F. It is important to point out that in this closed position, the first and second arms exert a pressure on the tyre 104, thus protecting the wheel rim 104B from eventual damages.

Also in this Figure 1F, it can be observed how the first and second arms 4, 6 comprise a first section 4A, 6A, arranged to the side of said tread supporting section, in which said first and second arms 4, 6 mutually converge towards each other as they distance from said tread supporting section and a second section 4B, 6B, arranged opposite to the first section 4A, 6A, in which the first and second arms 4, 6 mutually diverge from each other as they distance from the tread supporting section.

Furthermore, to improve the holding performance of the wheel holder 1 the first and second arms 4, 6 comprise a covering layer 8 arranged, in this case, on the surface 38 of the first and second arms 4, 6 facing the central symmetry plane P1. This covering layer 8 is made of a rubber elastic material, such as, for example, recycled tyres and covers this inner surface completely.

Furthermore, the surface 38 of the first and second arms 4, 6 facing central symmetry plane P1 is planar.

Finally, in this embodiment the pair of first and second arms 4, 6 are functionally associated to each other such that they move between the closed and said open positions in a synchronised manner. A linking bar not shown in detail in the figures connect the sliding guides 42 such that they can move together from the closed to the open position. However, it must be pointed out, that while the first arms 4 of each pair are movable with the sliding guides, the second arms 6 are static.

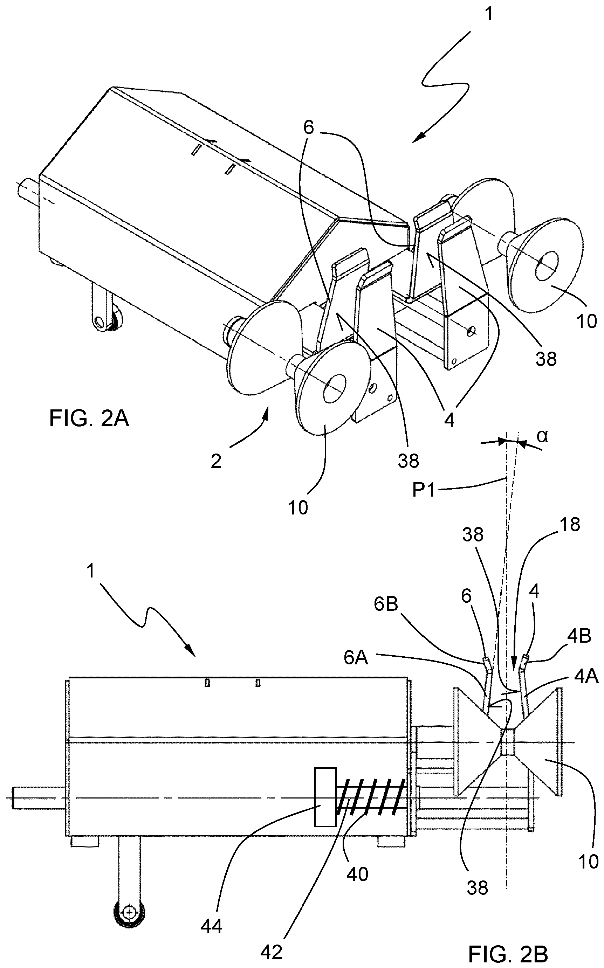

Figures 2A and 2B show a second embodiment of the wheel holder 1 of the invention. In this case, most of the technical features of this second embodiment are identical to the first embodiment already described. Therefore, reference is made to the previous paragraphs in relation to the features which are common with the previous embodiment.

The main difference of this embodiment is that in this case, the first and second arms 4, 6 do not comprise a covering layer 8 arranged on the surface 38 of the first and second arms 4, 6 facing the central symmetry plane P1.

Furthermore, in this case each of the first and second arms 4, 6 can move independently from the other pair.

As already explained before, the wheel holder of the invention can have several applications, but it is especially performing in elevated bicycle storing systems or elevated bicycle production lines.

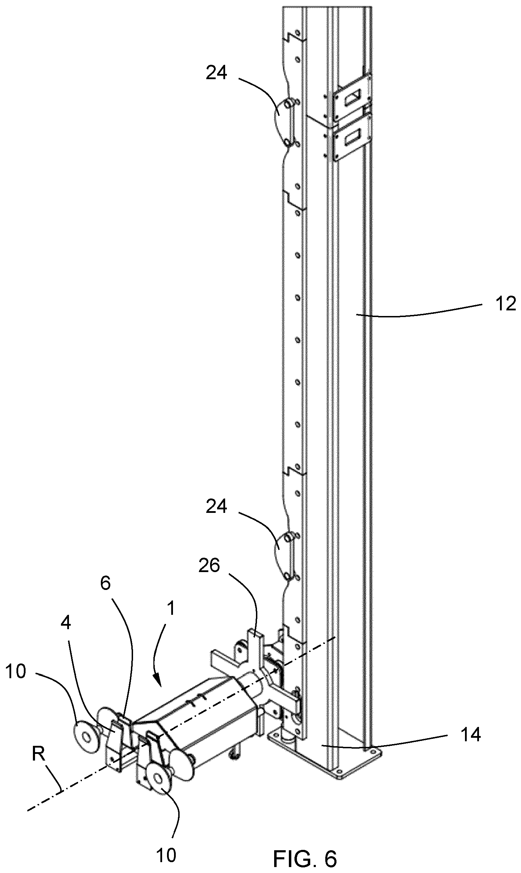

Finally, figure 6 shows an example of an elevated bicycle storing system 100 for public areas in the sense of the invention.

The system 100 comprises a delivery area arranged at a delivery level 14 and an elevated storage area arranged at a storage level 16.

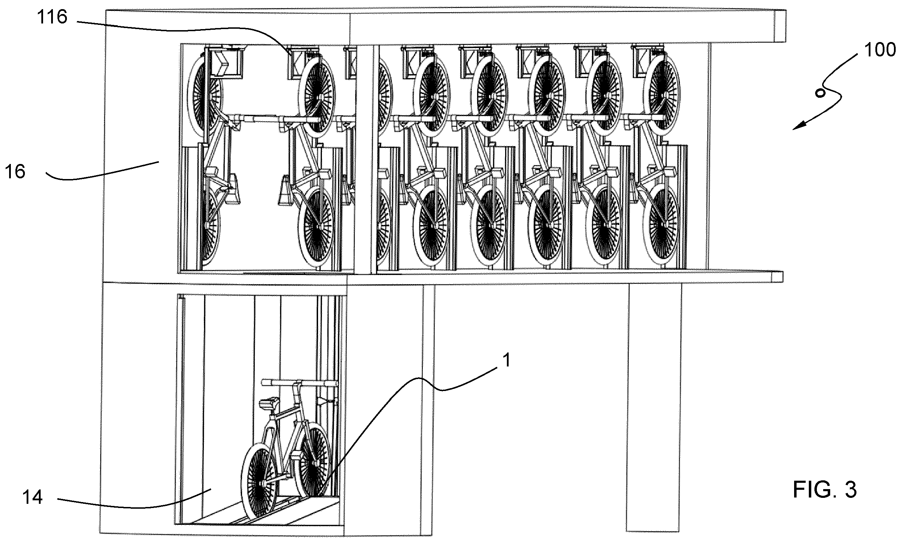

In this case the storage area consists in a closed cabinet containing a carrousel device 112 not shown in detail for storing a plurality of bicycles. Figure 3 shows the elevated bicycle handling system 100 including the wheel holder 1 of the invention.

The system comprises a lifting rail 12 and the wheel holder 1 of the invention.

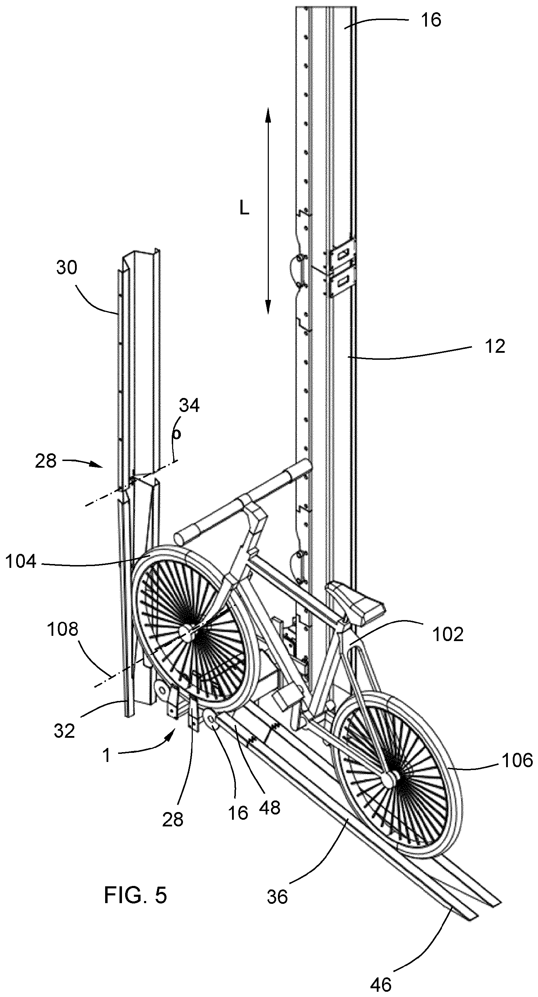

Figure 5 shows that the lifting rail 12 extends longitudinally between a delivery level 14 and a storage level 16, elevated relative to said delivery level 14. The lifting rail 12 defines a lifting direction L.

The wheel holder 1 applied to the bicycle storing system is movably mounted on the lifting rail 12 along the lifting direction L between the delivery level 14 and the storage level 16.

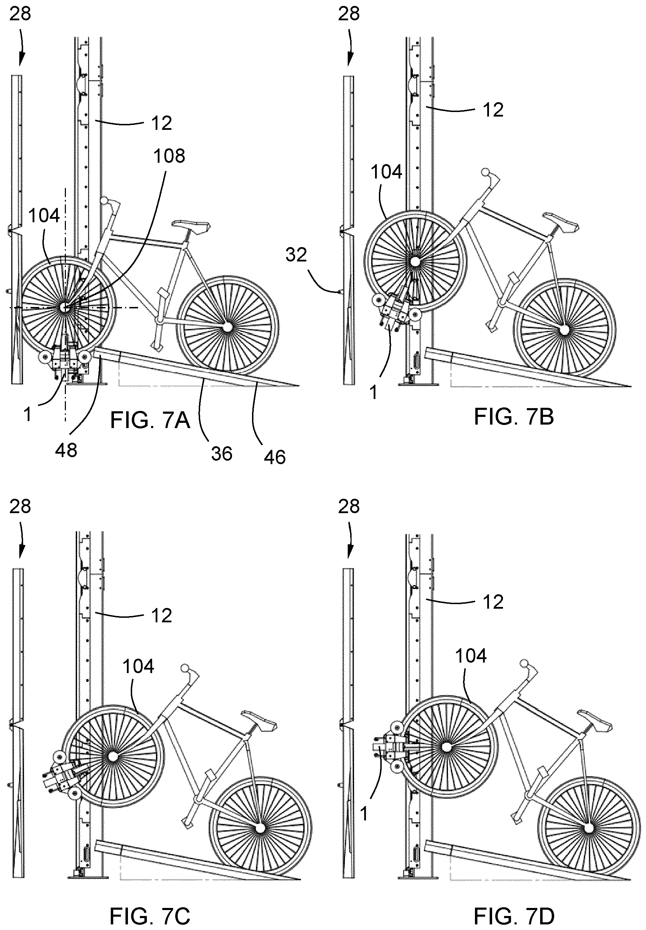

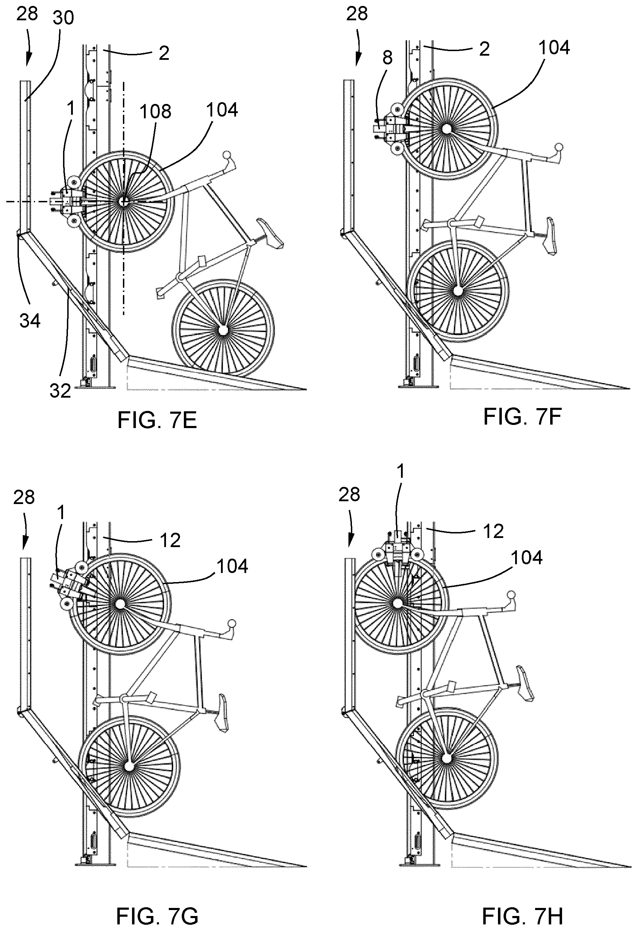

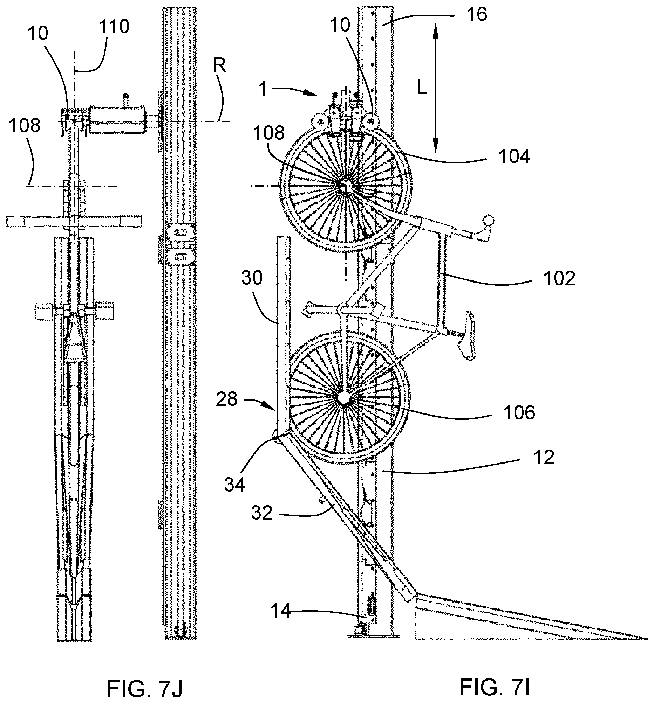

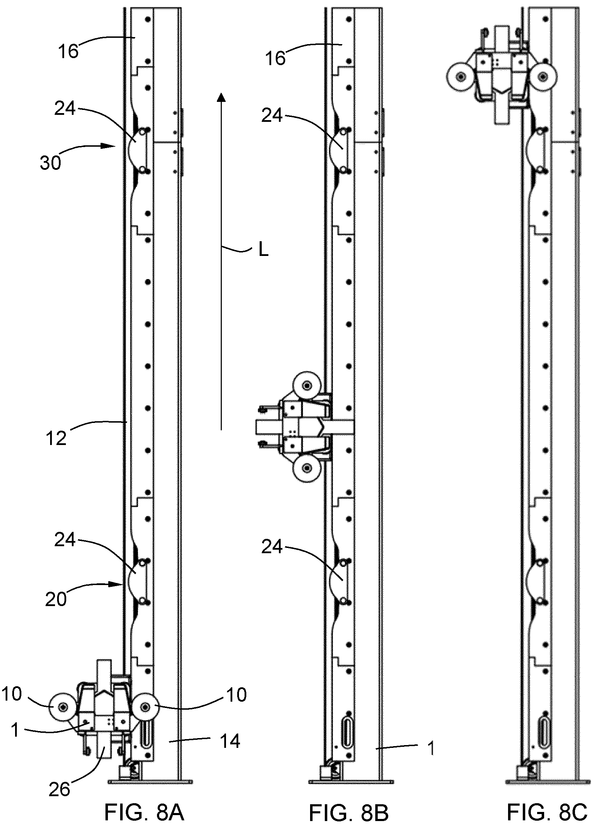

In Figures 8A to 8C it is apparent, that the wheel holder 1 is rotatably mounted relative to the lifting rail 12 about a rotation axis R (See Figure 7J) perpendicular to the lifting direction L, between a delivery position in which the opening 18 of the wheel holder 1 is facing upwards at the delivery level 14 for receiving the first wheel 104 (See Figure 6), and a lifting position in which the opening 18 of said wheel holder (1) is facing downwards at said storage level 16 (See Figures 7I and 7J).

Figures 7A to 7J, show that the movement of the wheel holder 1 along the lifting direction L and the rotation of the wheel holder 1 are functionally associated to one another to cause the rotation of the wheel holder 1 between said delivery and lifting positions during the movement of the wheel holder 1 between the delivery and storage levels 4, 6.

In delivery position the opening 18 of said clamp is facing vertically upwards (See Figure 7A), while in the lifting position the opening 18 of the clamp is facing vertically downwards (See Figure 7I).

Further in the system 100 of the invention the lifting rail 12 and the wheel holder 1 comprise a first rotation device 20 and a second rotation device 22. Figure 8A, shows how the first rotation device 20 is located close to delivery level 14 and remote to the storage level 16.

At its turn, the second rotation device 22 is located close to the storage level 16 and remote to the delivery level 14.

When said wheel holder 1 is moved between the delivery level 14 and the storage level 4, the first rotation device 20 causes a first rotation of the wheel holder 1 relative to the lifting rail 12 between the delivery position (See Figures 7A or 8A) and an intermediate position (See Figures 7D or 8B). Then the second rotation device 22 causes a second rotation of the wheel holder 1 relative to the lifting rail 12 between said intermediate position and lifting position (See Figures 7H to 7J and 8C).

More particularly in this embodiment shown in the Figures 8A to 8C the first and second rotation devices 12 comprise a rotation cam 24 and a rotation lever 26. The rotation cam 24 and the rotation lever 26 being functionally associated to said lifting rail 12 and the wheel holder 1 to cause the first and the second rotation of the wheel holder 1 relative to the lifting rail 12 during the movement of the wheel holder 1 between the delivery level 14 and the storage level 16.

Finally, Figures 7A to 7J show that the storing system 100 comprises a first guiding rail 28 arranged facing the wheel holder 1 such that in use, the first guiding rail 28 receives and guides the second wheel 106 opposite to the first wheel 104 held by the wheel holder 1 during the movement of the bicycle 102 along the lifting rail 12.

Furthermore, to optimally guide the bicycle when being lifted and avoiding the mudguard to touch the ground, the first guiding rail 28 comprises an upper main section 30 and a lower tilting end section 32 (See Figures 7A to 7J).

The tilting end section 32 is tiltable about a tilting axis 34, relative to the main section 30 between an aligned position and an angled position.

In this aligned position, the tilting end section 32 is aligned with the main section 30 of the first guiding rail 28. In the angled position the tilting end section 32 is angled relative to the main section 30 of the first guiding rail 28 towards the wheel holder 1.

The tilting end section 32 is functionally associated with the wheel holder 1 to go from the aligned position to the angled position once said wheel holder 1, moving towards said storage level, overcomes the tilting axis 34.

Finally, to make the delivery of the bicycle easier, the storing system 100 further comprises a second guiding rail 36 for receiving the first wheel 104. The second guiding rail 36 has a first and a second ends 46, 48. As it is apparent from Figures 5 or 7A, the second guiding rail 36 is aligned with the wheel holder 8 and the second end 48 arranged adjacent to the wheel holder 8 for guiding the first wheel 104 into the wheel holder 8.

Furthermore, the delivery comfort is improved when the second guiding rail 36 is inclined upwards towards the wheel holder 8, i.e., the second end 48 is higher than the first end 48.

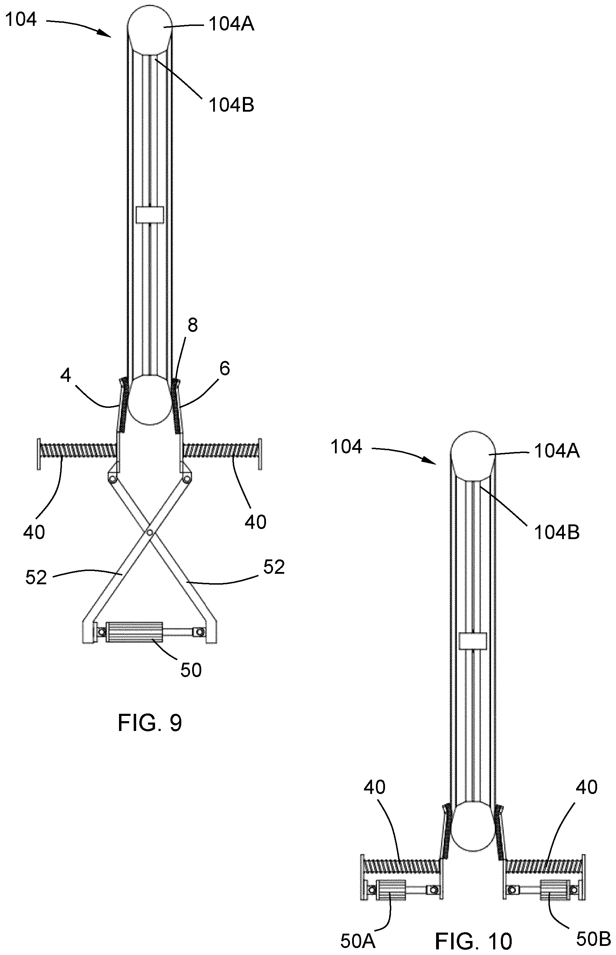

Figures 9 and 10 show possible arrangements of the wheel holder 1 of the invention in which the first and second arms 4, 6 are moved into the closed position. Differently to the previous examples, both arms are movable.

In the embodiment of Figure 9, both the first and second arms 4, 6 have an elastic member 40 functionally associated with the first and second arms 4, 6, to exert a force causing the first and second arms 4, 6 to adopt at rest the closed position shown in the Figure. To bring the first and second arms 4, 6 into the open position, there is provided an actuator 50. This actuator 50, such as a pneumatic cylinder, is connected to an end of a pair of levers 52. The opposite end of each of the levers 52 is connected to the lower end of the first and second arms 4,6.

To move the first and second arms 4, 6 to the open position, the actuator 50 is actuated such the first and second arms 4, 6 are moved away from the tyre 104A. As it is apparent, the first and second arms 4, 6 are moved together.

In the embodiment of Figure 10, both the first and second arms 4, 6 are also movable between the open and the closed positions. However, in this embodiment, the first arm 4, can be moved independently from the second arm 6. This is achieved by means of two independent actuators 50A and 50B. Again, the elastic member 40 exert the force causing the first and second arms 4, 6 to adopt at rest the closed position. Therefore, to move the first and second arms 4, 6 into the open position, the actuators 50A, 50B are actuated such the first and second arms 4, 6 are moved away from the tyre 104A.

## Claims

1. A wheel holder (1) for holding a first wheel (104) of a bicycle (102) in a bicycle handling system (100), said first wheel (104) comprising a tyre (104A) and a wheel rim (104B), said wheel holder (1) comprising
[a] a clamp and
[b] a tread supporting section,
said clamp comprising,
[c] a first and a second arms (4, 6) forming a first pair protruding relative to said tread supporting section, said second arm (6) being arranged facing said first arm (4), symmetrically to a longitudinal central symmetry plane (P1), said first and second arms (4, 6) defining an opening (18) for receiving said first wheel (104) of said bicycle (102) lengthwise,
[d] an elastic member (40), and
[e] said first and second arms (4, 6) being movable relative to each other between
[i] an open position, in which said first and second arms (4, 6) are distanced from each other for allowing the insertion or extraction of said first wheel (104) between said first and second arms (4, 6) and
[ii] a closed position, in which said first and second arms (4, 6) are close to each other for holding the side walls of said tyre (104A) inserted between said first and second arms (4, 6) and
[f] said elastic member (40) being functionally associated with said first and second arms (4, 6), to exert a force causing said first and second arms (4, 6) to adopt at rest said closed position,
**characterized in that**
[g] said tread supporting section comprises a self-centering device (2) for receiving said first wheel (104) in said wheel holder (1) in a centered manner.

2. The wheel holder (1) according to claim 1, **characterized in that** said first and second arms (4, 6) comprise a first section (4A, 6A), arranged to the side of said tread supporting section, in which said first and second arms (4, 6) mutually converge towards each other as they distance from said tread supporting section and a second section (4B, 6B), arranged opposite to said first section (4A, 6A), in which said first and second arms (4, 6) mutually diverge from each other as they distance from said tread supporting section.

3. The wheel holder (1) according to claim 1 or 2, **characterized in that** said first and second arms (4, 6) comprise a covering layer (8) arranged at least on a surface (38) of said first and second arms (4, 6) facing said central symmetry plane (P1), said covering layer (8) being made of a rubber elastic material.

4. The wheel holder (1) according to claim 3, **characterized in that** said surface (38) of said first and second arms (4, 6) facing said central symmetry plane is planar.

5. The wheel holder (1) according to any of claims 1 to 4, **characterized in that** said clamp comprises a second pair of first and second arms (4, 6), said first and second pairs of first and second arms (4, 6) being arranged distanced to each other, symmetrically to a transversal central symmetry plane (P2) perpendicular to said longitudinal central symmetry plane (P1).

6. The wheel holder (1) according to claim 5, **characterized in that** said first and second pairs of first and second arms (4, 6) are functionally associated to each other such that they move between said closed and said open position in a synchronised manner.

7. The wheel holder (1) according to any of claims 1 to 6, **characterized in that** said self-centering device comprises two centering wheels (10) having a decreasing diameter towards said central symmetry plane (P1), said centering wheels (10) being distanced from one another relative to said transversal central symmetry plane (P2) such that in use, the first wheel (104) is self-centered relative to transversal central symmetry plane (P2).

8. The wheel holder (1) according to claim 7, **characterized in that** said two centering wheels (10) are identical and symmetrically arranged relative to said transversal central symmetry plane (P2).

9. An elevated bicycle handling system (100) comprising
[a] a lifting rail (12) extending longitudinally between
[i] a delivery level (14) and
[ii] a storage level (16), elevated relative to said delivery level (14),
[b] said lifting rail (12) defining a lifting direction (L), **characterized in that** it further comprises a wheel holder (1) according to any of claims 1 to 7,
[c] said wheel holder (1) being movably mounted on said lifting rail (12) along said lifting direction (L) between
[i] said delivery level (14) and
[ii] said storage level (16),
[d] said wheel holder (1) is further rotatably mounted relative to said lifting rail (12) about a rotation axis (R) perpendicular to said lifting direction (L), between
[i] a delivery position in which said opening (18) of said wheel holder (1) is facing upwards at said delivery level (14) for receiving said first wheel (104), and
[ii] a lifting position in which said opening (18) of said wheel holder (1) is facing downwards at said storage level (16), and **in that**
[e] the movement of said wheel holder (1) along said lifting direction (L) and the rotation of said wheel holder (1) are functionally associated to one another to cause the rotation of said wheel holder (1) between said delivery and lifting positions during the movement of said wheel holder (1) between said delivery and storage levels (4, 6).

10. The elevated bicycle handling system (100) according to claim 9, **characterized in that** in said delivery position said opening (18) of said clamp is facing vertically upwards, while in said lifting position said opening (18) of said clamp is facing vertically downwards.

11. The elevated bicycle handling system (100) according to claims 9 or 10, **characterized in that** said lifting rail (12) and said wheel holder (1) comprise a first rotation device (20) and a second rotation device (22), said first rotation device (20) being located close to delivery level (14) and remote to said storage level (16), and said second rotation device (22) being located close to said storage level (16) and remote to said delivery level (14), such that when said wheel holder (1) is moved between said delivery level (14) and said storage level (4), said first rotation device (20) causes a first rotation of said wheel holder (1) relative to said lifting rail (12) between said delivery position and an intermediate position and said second rotation device (22) causes a second rotation of said wheel holder (1) relative to said lifting rail (12) between said intermediate position and said lifting position.

12. The elevated bicycle handling system (100) according to claim 11, **characterized in that** said first and second rotation devices (12) comprise a rotation cam (24) and a rotation lever (26), said rotation cam (24) and said rotation lever (26) being functionally associated to said lifting rail (12) and said wheel holder (1) to cause said first and said second rotation of said wheel holder (1) relative to said lifting rail (12) during the movement of said wheel holder (1) between said delivery level (14) and said storage level (16).

13. The elevated bicycle handling system (100) according to any of claims 9 to 11, **characterized in that** it comprises a first guiding rail (28) arranged facing said wheel holder (1) such that in use, said first guiding rail (28) receives and guides the second wheel (106) opposite to the first wheel (104) held by said wheel holder (1) during the movement of said bicycle (102) along said lifting rail (12).

14. The elevated bicycle handling system (100) according to claim 13, **characterized in that** said first guiding rail (28) comprises an upper main section (30) and a lower tilting end section (32), said tilting end section (32) being tiltable about a tilting axis (34), relative to said main section (30) between
[i] an aligned position in which said tilting end section (32) is aligned with said main section (30) of said first guiding rail (28) and
[ii] an angled position in which said tilting end section (32) is angled relative to said main section (30) of said first guiding rail (28) towards said wheel holder (1),
said tilting end section (32) being functionally associated with said wheel holder (1) to go from the aligned position to the angled position once said wheel holder (1) moving towards said storage level overcomes said tilting axis (34).

15. The elevated bicycle handling system (100) according to claim 14, **characterized in that** it further comprises a second guiding rail (36) for receiving at least said first wheel (104), said second guiding rail (36) having a first and a second ends (46, 48), and said second guiding rail (36) being aligned with said wheel holder (8) and having said second end (48) arranged adjacent to said wheel holder (8) for guiding the first wheel (104) into said wheel holder (8).

## Patentansprüche

1. Radhalter (1) zum Halten eines ersten Rads (104) eines Fahrrads (102) in einem Fahrradhandhabungssystem (100), wobei das erste Rad (104) einen Reifen (104A) und eine Radfelge (104B) umfasst, wobei der Radhalter (1) Folgendes umfasst:
[a] eine Klemme und
[b] einen Laufflächenstützabschnitt,
wobei die Klemme Folgendes umfasst:
[c] einen ersten und einen zweiten Arm (4, 6), die ein erstes Paar bilden, das relativ zu dem Laufflächenstützabschnitt hervorsteht, wobei der zweite Arm (6) derart angeordnet ist, dass er dem ersten Arm (4) symmetrisch zu einer längs verlaufenden zentralen Symmetrieebene (P1) zugewandt ist, wobei der erste und der zweite Arm (4, 6) eine Öffnung (18) zum Aufnehmen des ersten Rads (104) des Fahrrads (102) der Länge nach definieren,
[d] ein elastisches Element (40), und
[e] wobei der erste und der zweite Arm (4, 6) zwischen Folgendem relativ zueinander beweglich sind:
[i] einer offenen Position, in der der erste und der zweite Arm (4, 6) voneinander beabstandet sind, um ein Einsetzen oder Entnehmen des ersten Rads (104) zwischen dem ersten und dem zweiten Arm (4, 6) zu ermöglichen, und
[ii] einer geschlossenen Position, in der der erste und der zweite Arm (4, 6) nahe beieinander liegen, um die Seitenwände des Reifens (104A), der zwischen dem ersten und dem zweiten Arm (4, 6) eingesetzt ist, zu halten, und
[f] wobei das elastische Element (40) funktionell dem ersten und dem zweiten Arm (4, 6) zugeordnet ist, um eine Kraft auszuüben, um zu bewirken, dass der erste und der zweite Arm (4, 6) im Ruhezustand die geschlossene Position annehmen,
**dadurch gekennzeichnet, dass**
[g] der Laufflächenstützabschnitt eine selbstzentrierende Vorrichtung (2) zum Aufnehmen des ersten Rads (104) in dem Radhalter (1) auf zentrierte Art und Weise umfasst.

2. Radhalter (1) nach Anspruch 1, **dadurch gekennzeichnet, dass** der erste und der zweite Arm (4, 6) einen ersten Abschnitt (4A, 6A), der an der Seite des Laufflächenstützabschnitts angeordnet ist, in dem der erste und der zweite Arm (4, 6) sich einander annähern, wenn sie sich von dem Laufflächenstützabschnitt entfernen, und einen zweiten Abschnitt (4B, 6B), der gegenüber dem ersten Abschnitt (4A, 6A) angeordnet ist, in dem der erste und der zweite Arm (4, 6) auseinanderlaufen, wenn sie sich von dem Laufflächenstützabschnitt entfernen, umfassen.

3. Radhalter (1) nach Anspruch 1 oder 2, **dadurch gekennzeichnet, dass** der erste und der zweite Arm (4, 6) eine Abdeckschicht (8) umfassen, die zumindest auf einer Oberfläche (38) des ersten und des zweiten Arms (4, 6) angeordnet ist, die der zentralen Symmetrieebene (P1) zugewandt ist, wobei die Abdeckschicht (8) aus einem elastischen Kautschukmaterial besteht.

4. Radhalter (1) nach Anspruch 3, **dadurch gekennzeichnet, dass** die Oberfläche (38) des ersten und des zweiten Arms (4, 6), die der zentralen Symmetrieebene zugewandt sind, planar ist.

5. Radhalter (1) nach einem der Ansprüche 1 bis 4, **dadurch gekennzeichnet, dass** die Klemme ein zweites Paar des ersten und des zweiten Arms (4, 6) umfasst, wobei das erste und das zweite Paar des ersten und des zweiten Arms (4, 6) entfernt voneinander symmetrisch zu einer quer verlaufenden zentralen Symmetrieebene (P2), die senkrecht zu der längs verlaufenden zentralen Symmetrieebene (P1) verläuft, angeordnet sind.

6. Radhalter (1) nach Anspruch 5, **dadurch gekennzeichnet, dass** das erste und das zweite Paar des ersten und des zweiten Arms (4, 6) funktionell einander zugeordnet sind, sodass sie sich auf synchronisierte Art und Weise zwischen der geschlossenen und der offenen Position bewegen.

7. Radhalter (1) nach einem der Ansprüche 1 bis 6, **dadurch gekennzeichnet, dass** die selbstzentrierende Vorrichtung zwei zentrierende Räder (10) mit einem abnehmenden Durchmesser zu der zentralen Symmetrieebene (P1) umfasst, wobei die zentrierenden Räder (10) relativ zu der quer verlaufenden zentralen Symmetrieebene (P2) voneinander beabstandet sind, sodass das erste Rad (104) im Gebrauch relativ zu der quer verlaufenden zentralen Symmetrieebene (P2) selbstzentriert ist.

8. Radhalter (1) nach Anspruch 7, **dadurch gekennzeichnet, dass** die zwei zentrierenden Räder (10) relativ zu der quer verlaufenden zentralen Symmetrieebene (P2) identisch und symmetrisch angeordnet sind.

9. Erhöhtes Fahrradhandhabungssystem (100), umfassend
[a] eine Hebeschiene (12), die sich längs zwischen Folgendem erstreckt:
[i] einer Abgabeebene (14) und
[ii] einer Lagerebene (16), die relativ zu der Abgabeebene (14) erhöht ist,
[b] wobei die Hebeschiene (12) eine Heberichtung (L) definiert, **dadurch gekennzeichnet, dass** sie ferner einen Radhalter (1) nach einem der Ansprüche 1 bis 7 umfasst,
[c] wobei der Radhalter (1) beweglich an der Hebeschiene (12) entlang der Heberichtung (L) zwischen Folgendem montiert ist:
[i] der Abgabeebene (14) und
[ii] der Lagerebene (16),
[d] wobei der Radhalter (1) ferner relativ zu der Hebeschiene (12) um eine Rotationsachse (R) senkrecht zu der Heberichtung (L) zwischen Folgendem rotierbar montiert ist:
[i] einer Abgabeposition, in der die Öffnung (18) des Radhalters (1) nach oben zur Abgabeebene (14) gewandt ist, um das erste Rad (104) aufzunehmen, und
[ii] einer Hebeposition, in der die Öffnung (18) des Radhalters (1) nach unten zur Lagerebene (16) gewandt ist, und dadurch, dass
[e] die Bewegung des Radhalters (1) entlang der Heberichtung (L) und die Rotation des Radhalters (1) funktionell einander zugeordnet sind, um die Rotation des Radhalters (1) zwischen der Abgabe- und der Hebeposition während der Bewegung des Radhalters (1) zwischen der Abgabe- und der Lagerebene (4, 6) zu bewirken.

10. Erhöhtes Fahrradhandhabungssystem (100) nach Anspruch 9, **dadurch gekennzeichnet, dass** die Öffnung (18) der Klemme in der Abgabeposition vertikal nach oben gewandt ist, während die Öffnung (18) der Klemme in der Hebeposition vertikal nach unten gewandt ist.

11. Erhöhtes Fahrradhandhabungssystem (100) nach Anspruch 9 oder 10, **dadurch gekennzeichnet, dass** die Hebeschiene (12) und der Radhalter (1) eine erste Rotationsvorrichtung (20) und eine zweite Rotationsvorrichtung (22) umfassen, wobei sich die erste Rotationsvorrichtung (20) nahe der Abgabeebene (14) und entfernt von der Lagerebene (16) befindet und sich die zweite Rotationsvorrichtung (22) nahe der Lagerebene (16) und entfernt von der Abgabeebene (14) befindet, sodass, wenn der Radhalter (1) zwischen der Abgabeebene (14) und der Lagerebene (4) bewegt wird, die erste Rotationsvorrichtung (20) eine erste Rotation des Radhalters (1) relativ zu der Hebeschiene (12) zwischen der Abgabeposition und einer Zwischenposition bewirkt und die zweite Rotationsvorrichtung (22) eine zweite Rotation des Radhalters (1) relativ zu der Hebeschiene (12) zwischen der Zwischenposition und der Hebeposition bewirkt.

12. Erhöhtes Fahrradhandhabungssystem (100) nach Anspruch 11, **dadurch gekennzeichnet, dass** die erste und die zweite Rotationsvorrichtung (12) einen Rotationsnocken (24) und einen Rotationshebel (26) umfassen, wobei der Rotationsnocken (24) und der Rotationshebel (26) funktionell der Hebeschiene (12) und dem Radhalter (1) zugeordnet sind, um die erste und die zweite Rotation des Radhalters (1) relativ zu der Hebeschiene (12) während der Bewegung des Radhalters (1) zwischen dem Abgabehebel (14) und dem Lagerhebel (16) zu bewirken.

13. Erhöhtes Fahrradhandhabungssystem (100) nach einem der Ansprüche 9 bis 11, **dadurch gekennzeichnet, dass** es eine erste Führungsschiene (28) umfasst, die derart angeordnet ist, dass sie dem Radhalter (1) zugewandt ist, sodass die erste Führungsschiene (28) im Gebrauch das zweite Rad (106) gegenüber dem ersten Rad (104), das von dem Radhalter (1) gehalten wird, während der Bewegung des Fahrrads (102) entlang der Hebeschiene (12) aufnimmt und führt.

14. Erhöhtes Fahrradhandhabungssystem (100) nach Anspruch 13, **dadurch gekennzeichnet, dass** die erste Führungsschiene (28) einen oberen Hauptabschnitt (30) und einen unteren sich neigenden Endabschnitt (32) umfasst, wobei der sich neigende Endabschnitt (32) um eine Neigungsachse (34) relativ zu dem Hauptabschnitt (30) zwischen Folgendem neigbar ist:
[i] einer ausgerichteten Position, in der der sich neigende Endabschnitt (32) an dem Hauptabschnitt (30) der ersten Führungsschiene (28) ausgerichtet ist, und
[ii] einer abgewinkelten Position, in der der sich neigende Endabschnitt (32) relativ zu dem Hauptabschnitt (30) der ersten Führungsschiene (28) zu dem Radhalter (1) abgewinkelt ist,
wobei der sich neigende Endabschnitt (32) funktionell dem Radhalter (1) zugeordnet ist, um von der ausgerichteten zu der abgewinkelten Position überzugehen, sobald der Radhalter (1), der sich zu der Lagerebene bewegt, die Neigungsachse (34) überwunden hat.

15. Erhöhtes Fahrradhandhabungssystem (100) nach Anspruch 14, **dadurch gekennzeichnet, dass** es ferner eine zweite Führungsschiene (36) zum Aufnehmen von zumindest dem ersten Rad (104) umfasst, wobei die zweite Führungsschiene (36) ein erstes und ein zweites Ende (46, 48) aufweist und die zweite Führungsschiene (36) an dem Radhalter (8) ausgerichtet ist und das zweite Ende (48) aufweist, das benachbart zu dem Radhalter (8) angeordnet ist, um das erste Rad (104) in den Radhalter (8) zu führen.

## Revendications

1. Support de roue (1) pour maintenir une première roue (104) d'une bicyclette (102) dans un système de manipulation de bicyclette (100), ladite première roue (104) comprenant un pneu (104A) et une jante de roue (104B), ledit support de roue (1) comprenant :
[a] un dispositif de serrage, et
[b] une section de support de bande de roulement,
ledit dispositif de serrage comprenant :
[c] un premier et un deuxième bras (4, 6) formant une première paire en saillie par rapport à ladite section de support de bande de roulement, ledit deuxième bras (6) étant agencé pour faire face audit premier bras (4), de manière symétrique à un plan de symétrie central longitudinal (P1), lesdits premier et deuxième bras (4, 6) définissant une ouverture (18) pour recevoir ladite première roue (104) de ladite bicyclette (102) dans le sens de la longueur,
[d] un élément élastique (40), et
[e] lesdits premier et deuxième bras (4, 6) étant mobiles l'un par rapport à l'autre entre :
[i] une position ouverte, dans laquelle lesdits premier et deuxième bras (4, 6) sont éloignés l'un de l'autre pour permettre une insertion ou une extraction de ladite première roue (104) entre lesdits premier et deuxième bras (4, 6), et
[ii] une position fermée, dans laquelle lesdits premier et deuxième bras (4, 6) sont à proximité l'un de l'autre pour maintenir les parois latérales dudit pneu (104A) insérées entre lesdits premier et deuxième bras (4, 6), et
[f] ledit élément élastique (40) étant fonctionnellement associé avec lesdits premier et deuxième bras (4, 6) afin d'exercer une force amenant lesdits premier et deuxième bras (4, 6) à adopter, au repos, ladite position fermée,
**caractérisé en ce que :**
[g] ladite section de support de bande de roulement comprend un dispositif d'auto-centrage (2) pour recevoir ladite première roue (104) dans ledit support de roue (1) d'une manière centrée.

2. Support de roue (1) selon la revendication 1, **caractérisé en ce que** lesdits premier et deuxième bras (4, 6) comprennent une première section (4A, 6A) agencée sur le côté de ladite section de support de bande de roulement, dans laquelle lesdits premier et deuxième bras (4, 6) convergent mutuellement l'un vers l'autre lorsqu'ils s'éloignent de ladite section de support de bande de roulement et une deuxième section (4B, 6B) agencée à l'opposé de ladite première section (4A, 6A), dans laquelle lesdits premier et deuxième bras (4, 6) divergent mutuellement l'un de l'autre lorsqu'ils s'éloignent de ladite section de support de bande de roulement.

3. Support de roue (1) selon la revendication 1 ou 2, **caractérisé en ce que** lesdits premier et deuxième bras (4, 6) comprennent une couche de revêtement (8) agencée au moins sur une surface (38) desdits premier et deuxième bras (4, 6) faisant face audit plan de symétrie central (P1), ladite couche de revêtement (8) étant réalisée à partir d'un matériau élastique en caoutchouc.

4. Support de roue (1) selon la revendication 3, **caractérisé en ce que** ladite surface (38) desdits premier et deuxième bras (4, 6) faisant face audit plan de symétrie central est plane.

5. Support de roue (1) selon l'une quelconque des revendications 1 à 4, **caractérisé en ce que** ledit dispositif de serrage comprend une deuxième paire de premier et deuxième bras (4, 6), lesdites première et deuxième paires de premier et deuxième bras (4, 6) étant agencées à distance l'une de l'autre, de manière symétrique à un plan de symétrie central transversal (P2) perpendiculaire audit plan de symétrie central longitudinal (P1).

6. Support de roue (1) selon la revendication 5, **caractérisé en ce que** lesdites première et deuxième paires de premier et deuxième bras (4, 6) sont fonctionnellement associées entre elles de sorte qu'elles se déplacent entre ladite position fermée et ladite position ouverte d'une manière synchronisée.

7. Support de roue (1) selon l'une quelconque des revendications 1 à 6, **caractérisé en ce que** ledit dispositif d'auto-centrage comprend deux roues de centrage (10) ayant un diamètre décroissant vers ledit plan de symétrie central (P1), lesdites roues de centrage (10) étant éloignées l'une de l'autre par rapport audit plan de symétrie central transversal (P2), de sorte que, à l'usage, la première roue (104) est autocentrée par rapport au plan de symétrie central transversal (P2).

8. Support de roue (1) selon la revendication 7, **caractérisé en ce que** lesdites deux roues de centrage (10) sont identiques et agencées de manière symétrique par rapport audit plan de symétrie central transversal (P2).

9. Système de manipulation de bicyclette en hauteur (100) comprenant :
[a] un rail de levage (12) s'étendant longitudinalement entre :
[i] un niveau de distribution (14), et
[ii] un niveau de stockage (16), élevé par rapport audit niveau de distribution (14),
[b] ledit rail de levage (12) définissant une direction de levage (L), **caractérisé en ce qu'il** comprend en outre un support de roue (1) selon l'une quelconque des revendications 1 à 7,
[c] ledit support de roue (1) étant monté, de manière mobile, sur ledit rail de levage (12) le long de ladite direction de levage (L) entre :
[i] ledit niveau de distribution (14), et
[ii] ledit niveau de stockage (16),
[d] ledit support de roue (1) est en outre monté, en rotation, par rapport audit rail de levage (12) autour d'un axe de rotation (R) perpendiculaire à ladite direction de levage (L), entre :
[i] une position de distribution dans laquelle ladite ouverture (18) dudit support de roue (1) est orientée vers le haut au niveau dudit niveau de distribution (14) pour recevoir ladite première roue (104), et
[ii] une position de levage dans laquelle ladite ouverture (18) dudit support de roue (1) est orientée vers le bas au niveau dudit niveau de stockage (16), et **en ce que** :
[e] le mouvement dudit support de roue (1) le long de ladite direction de levage (L) et la rotation dudit support de roue (1) sont fonctionnellement associés entre eux pour provoquer la rotation dudit support de roue (1) entre lesdites positions de distribution et de levage pendant le mouvement dudit support de roue (1) entre lesdits niveaux de distribution et de stockage (4, 6).

10. Système de manipulation de bicyclette en hauteur (100) selon la revendication 9, **caractérisé en ce que,** dans ladite position de distribution, ladite ouverture (18) dudit dispositif de serrage est orientée verticalement vers le haut, alors que dans ladite position de levage, ladite ouverture (18) dudit dispositif de serrage est orientée verticalement vers le bas.

11. Système de manipulation de bicyclette en hauteur (100) selon les revendications 9 ou 10, **caractérisé en ce que** ledit rail de levage (12) et ledit support de roue (1) comprennent un premier dispositif de rotation (20) et un deuxième dispositif de rotation (22), ledit premier dispositif de rotation (20) étant positionné à proximité du niveau de distribution (14) et à distance dudit niveau de stockage (16), et ledit deuxième dispositif de rotation (22) étant positionné à proximité dudit niveau de stockage (16) et à distance dudit niveau de distribution (14), de sorte que lorsque ledit support de roue (1) est déplacé entre ledit niveau de distribution (14) et ledit niveau de stockage (4), ledit premier dispositif de rotation (20) provoque une première rotation dudit support de roue (1) par rapport audit rail de levage (12) entre ladite position de distribution et une position intermédiaire et ledit deuxième dispositif de rotation (22) provoque une deuxième rotation dudit support de roue (1) par rapport audit rail de levage (12) entre ladite position intermédiaire et ladite position de levage.

12. Système de manipulation de bicyclette en hauteur (100) selon la revendication 11, **caractérisé en ce que** lesdits premier et deuxième dispositifs de rotation (12) comprennent une came de rotation (24) et un levier de rotation (26), ladite came de rotation (24) et ledit levier de rotation (26) étant fonctionnellement associés audit rail de levage (12) et audit support de roue (1) pour provoquer ladite première et ladite deuxième rotation dudit support de roue (1) par rapport audit rail de levage (12) pendant le mouvement dudit support de roue (1) entre ledit niveau de distribution (14) et ledit niveau de stockage (16).

13. Système de manipulation de bicyclette en hauteur (100) selon l'une quelconque des revendications 9 à 11, **caractérisé en ce qu'il** comprend un premier rail de guidage (28) agencé pour faire face audit support de roue (1) de sorte que, à l'usage, ledit premier rail de guidage (28) reçoit et guide la deuxième roue (106) opposée à la première roue (104) maintenue par ledit support de roue (1) pendant le déplacement de ladite bicyclette (102) le long dudit rail de levage (12).

14. Système de manipulation de bicyclette en hauteur (100) selon la revendication 13, **caractérisé en ce que** ledit premier rail de guidage (28) comprend une section principale supérieure (30) et une section d'extrémité inférieure inclinable (32), ladite section d'extrémité inclinable (32) pouvant s'incliner autour d'un axe d'inclinaison (34), par rapport à ladite section principale (30) entre :
[i] une position alignée dans laquelle ladite section d'extrémité inclinable (32) est alignée avec ladite section principale (30) dudit premier rail de guidage (28), et
[ii] une position coudée dans laquelle ladite section d'extrémité inclinable (32) est coudée par rapport à ladite section principale (30) dudit premier rail de guidage (28) vers ledit support de roue (1), ladite section d'extrémité inclinable (32) étant fonctionnellement associée avec ledit support de roue (1) pour aller de la position alignée à la position coudée, une fois que ledit support de roue (1) se déplaçant vers ledit niveau de stockage vient à bout dudit axe d'inclinaison (34).

15. Système de manipulation de bicyclette en hauteur (100) selon la revendication 14, **caractérisé en ce qu'**il comprend en outre un deuxième rail de guidage (36) pour recevoir au moins ladite première roue (104), ledit deuxième rail de guidage (36) ayant une première et une deuxième extrémité (46, 48) et ledit deuxième rail de guidage (36) étant aligné avec ledit support de roue (8) et ayant ladite deuxième extrémité (48) agencée de manière adjacente audit support de roue (8) afin de guider la première roue (104) dans ledit support de roue (8).
